# EUROPÄISCHE PATENTSCHRIFT

(11) **EP 2 823 282 B1**
(45) Veröffentlichungstag und Bekanntmachung des Hinweises auf die Patenterteilung: **25.10.2017**
(21) Anmeldenummer: 13712493.9
(22) Anmeldetag: 01.03.2013
(51) Int. Cl.: G01N 1/30

(54) **FORMALINFREIE FIXIERUNGSMITTEL FÜR HISTOLOGISCHE FÄRBUNGEN VON GEWEBEPROBEN**
FOMALIN FREE FIXATIVES FOR HISTOLOGICAL STAINING OF TISSUE SAMPLES
FIXATIFS SANS FORMOL POUR COLORATION HISTOLOGIQUE D'ECHANTILLONS DE TISSUS

(30) Priorität: 06.03.2012 DE 102012101896
(43) Veröffentlichungstag der Anmeldung: 14.01.2015
(73) Patentinhaber: Gerigk, Roberto, 84453 Mühldorf am Inn (DE)
(72) Erfinder: GUDO, Michael, 63477 Maintal (DE)
(74) Vertreter: Wittmann, Ernst-Ulrich
(86) Internationale Anmeldenummer: PCT/EP2013/054146
(87) Internationale Veröffentlichungsnummer: WO 2013/131816

(56) Entgegenhaltungen:
- WO-A1-94/04906
- WO-A1-94/07532
- WO-A1-97/39330
- US-A- 6 072 086
- US-A1- 2010 209 930

## Beschreibung

(1) Die Erfindung betrifft eine Fixierlösung zur Fixierung von Gewebeproben bzw. Gewebeschnitten, die nicht mit Formalin fixiert wurden. Besonders vorteilhaft erweist sich die vorliegende Erfindung, für empfindliche, bei Formalinfixierung schwierig schneidbare Gewebe, die sich nicht nur in besserer Qualität ohne Artefakte schneiden lassen, sondern in der Färbung auch höhere Brillanz und Farbstabilität aufweisen.
(2) Für histologische Untersuchungen in Biologie und Medizin werden Gewebeproben, einem Organismus üblicherweise frisch entnommen, oder auch ganze Organe oder ganze Tiere / Tierkörper/Pflanzen bzw. Organismen in speziellen, so genannten Fixierlösungen eingelegt (Infiltration), bzw. mit der Fixierlösung über eine Perfussions- oder Instillationseinrichtung durchtränkt. Die Fixierung dient dazu den Zustand des Gewebes zum Zeitpunkt der Entnahme zu fixieren (= festlegen), um eben diesen Zustand zu einem späteren Zeitpunkt direkt mikroskopisch zu untersuchen und/oder anzufärben und dann die angefärbten Zell- oder Gewebeteile anhand ihrer chemischen Eigenschaften mikroskopisch zu differenzieren und somit zu untersuchen bzw. Diagnosen zu stellen.
(3) Wird eine Gewebeprobe in die Fixierlösung eingelegt, so spricht man von einer "Immersionsfixierung", wird das Gewebestück bzw. Organ oder der ganze Organismus über sein Gefäßsystem mit der Fixierlösung durchtränkt, spricht man von Perfussions- oder Instillationsfixierung. Der Fixiervorgang ist eine chemische Reaktion des eigentlichen Fixierungsmittels mit den Proteinen des Gewebes. Auf diese Weise wird eine Probe haltbar gemacht, d.h. es werden Zersetzungsvorgänge durch Enzyme, Bakterien oder Pilze verhindert. Zudem wird das Gewebe gehärtet und damit überhaupt erst in einen Zustand versetzt, dass man es mit einem Mikrotom in dünne, wenige µm dicke Scheiben schneiden kann.
(4) Im Anschluss an die Fixierung kann die Gewebeprobe beispielsweise in Paraffin eingebettet werden. Hierzu wird üblicherweise die Probe in einer Alkoholreihe mit aufsteigenden Konzentrationen zunächst entwässert. Anschließend wird über ein so genanntes Intermedium der Alkohol entfernt, die Probe dann über Xylol oder einen Xylolersatzstoff in mehreren Schritten mit Paraffin durchtränkt und schließlich mittels einer Form in Paraffin eingegossen. Nach dem Erstarren des Paraffins, wird der so gewonnene Paraffinblock an einem Mikrotom zu Dünnschnitten verarbeitet (i.d.R. zwischen 2 und 5 µm Dicke).
   Ein Paraffinblock kann praktisch unbegrenzt bei Raumtemperaturbedingungen bzw. leicht gekühlt gelagert werden d.h., dass beispielsweise einzelne Schnitte erstellt werden können, der Block dann wieder eingelagert und für spätere Weiterverarbeitung aufbewahrt werden kann.
(5) Anstatt Paraffin können auch andere Polymere für die Einbettung von Proben zum Einsatz kommen wie Celloidin, hochmolekulares PEG, Acrylate und andere.
(6) Solche Dünnschnitte werden üblicherweise auf Glasobjektträger aufgezogen und anschließend gem. spezieller Anweisungen (so genannter histologischer Färbeprotokolle oder Färbevorschriften) gefärbt. Erst durch die Färbung wird es möglich, Unterschiede im Gewebeaufbau mikroskopisch zu differenzieren, krankhaftes von gesundem Gewebe zu unterscheiden und diagnostische Beurteilungen durchzuführen, da die verwendeten Farbstoffe spezifisch an bestimmte Strukturen oder chemische Komponenten der Gewebestrukturen binden, und diese somit spezifisch, d.h. abhängig von ihrem Chemismus einfärben. So lassen sich z.B. Zellkerne deutlich vom Zellplasma differenzieren, es werden verschiedene Zelltypen unterschiedlich angefärbt, ebenso Fasern und andere Gewebebestandteile. Das Gesamtbild einer Färbung erlaubt dann eine diagnostische Beurteilung der untersuchten Gewebe.
(7) Das gängigste Fixiermittel in der Histologie ist Formalin. Es wurde von Isaak und Ferdinand Blum am Forschungsinstitut Senckenberg in Frankfurt am Main in den frühen 1890er Jahren als Fixierungsmittel für Gewebeproben erstmals eingesetzt und erwies sich von Anfang an als wesentlich besser geeignet, als z.B. Spiritus (Ethanol), Terpentin und andere Substanzen (vgl. I. Blum: 1893). Sehr schnell nahm Formalin seinen Siegeszug durch die Medizin und hat sich schließlich als das ultimative Fixiermittel weltweit durchgesetzt, weil es leicht zu beschaffen und leicht zu handhaben war, und die Ergebnisse über ein breites Anwendungsgebiet hinweg miteinander vergleichbar sind.
(8) Neben dem Formalin wurden und werden in der Histologie auch noch viele weitere Fixiermittel verwendet, die auf der Basis von Methanol, Ethanol, Essigsäure, Chloroform, Chloralhydrat, Pikrinsäure, Quecksilberdichlorid, Kaliumdichromat, Chromsäure, Osmiumtetroxid und verschiedenen Salzlösungen und Salzgemischen beruhen. All diese Fixiermittel sind jedoch nicht universell, sondern nur jeweils spezifisch für bestimmte Gewebetypen, bestimmte Fragestellungen und Weiterverarbeitungen geeignet. Es besteht ein direkter Zusammenhang zwischen Fixierung (Fixiermittel), Gewebeerhaltung und Ergebnis der Färbung, die schließlich im Mikroskop ausgewertet werden kann. Da die Fixierung in den allermeisten Fällen eine chemische Reaktion darstellt (siehe hierzu "Histological Techniques, Laboratory Manual Columbia University", 1975), welche die chemischen Eigenschaften der Gewebe beeinflusst ist schon lange bekannt, dass bestimmte Farbstoffe bzw. bestimmte Farbstofflösungen nur mit bestimmten Fixiermitteln bzw. Fixierverfahren kompatibel bzw. inkompatibel sind. Wenn z.B. mit Ethanol oder mit Ethanol-Essigsäuregemischen fixiert wurde, lassen sich Gewebedifferenzierungen grundsätzlich nur noch sehr schwer durchführen, sowohl weil Zellen und Gewebe bei Ethanolfixierung stark dehydriert werden und schrumpfen, als auch, weil z.B. Beizenfarbstoffe keine zufriedenstellenden Ergebnisse liefern. Andererseits sind Färbungen z.B. bei Verwendung von Pikrinsäure wesentlich brillanter und kräftiger in ihrer Ausprägung, als bei Verwendung von Formalin als Fixiermittel, so dass in manchen Färbeprotokollen auch Vorbehandlungen der Schnitte mit Pikrinsäure empfohlen werden.
(9) Obwohl Formalin sich anfangs als hervorragendes Fixiermittel auszeichnete, zeigte sich mit der Zeit, dass bei zahlreichen Färbetechniken in der Histologie und Pathologie einige Probleme auftraten. Da Formaldehyd in Lösung und in Kontakt mir der Luft zu Ameisensäure oxidiert, bilden sich in blutreichen Proben die so genanten "Formalin Pigmente". Diese hoch refringenten Kristalle bilden sich aus der Reaktion von Ameisensäure und Blut und werden in der Histologie und Pathologie als störende Artefakte wahrgenommen. Auch Stabilisatoren gegen die Polymerisierung, die der kommerziellen Formalinlösung zugegeben werden, wie Methanol und Butanol, können die Ergebnisse histologischen Färbung negativ beeinflussen, da sie - ähnlich wie Ethanol - dehydrierend wirken und manche Farbstoff-Gewebe-Verbindungen stören.
(10) Auch in einem speziellen Zweig der Histologie, der so genannten Immunhistochemie spielt Formalin eine zentrale Rolle. Hier wird es i.d.R. aber nicht als "Formalin 4%ig", sondern als "Paraformaldehyd-Lösung" verwendet. Paraformaldehyd (PFA) ist die polymerisierte Form des Formalin, die als Pulver im Handel erhältlich ist und in heißer, alkalischer Lösung vollständig gelöst werden kann.
   Formalin (die wässrige Lösung des Formaldehyd-Gases) hat die Eigenschaft in wässriger Lösung Ketten von Paraformaldehyd zu bilden, die ausfällen können. Des Weiteren zersetzt sich Formaldehyd unter Licht-, Wärme- und/oder Sauerstoffeinwirkung zu Ameisensäure. In einer wässrigen Formalinlösung finden ständige Abbau- und Polymerisierungsreaktionen statt, denen zur Folge das Formaldehyd kontinuierlich abgebaut wird. Da es auch Rückbildungsreaktionen gibt (Depolymerisierung der PFA-Ketten, sowie Gleichgewichtsreaktionen) kann der prozentuale Anteil des Formaldehyds in einer wässrigen Lösung niemals genau benannt werden.
   Die "Stammlösung", die unter dem Handelsname "Formol" bekannt ist, hat eine Formaldehyd Konzentration von 35 - 37 %, teilweise auch 37 - 38 %. Formol wird in verschiedenen Qualitäten angeboten: technisch, stabilisiert und gepuffert. Hierbei werden dieser gesättigten Formaldehydlösung Zusätze beigemengt: stabilisiert wird mit Methanol (zur Verhinderung der PFA-Bildung), gepuffert wird mit Calciumkarbonat, Borax oder einem Phosphat-Gemisch (gegen die Absenkung des pH-Wertes bei Zersetzung zu Ameisensäure). Anschließend wird aus dieser Stammlösung eine 4%ige Formalinlösung durch Verdünnung (etwa 1 + 9) hergestellt, die demzufolge eben nicht exakt 4%ig, sondern eher 3,5 - 3,9 %ig ist. Manche Hersteller bieten 4%iges Formalin als "echtes" 4%iges Formalin an, d.h. es wird die Stammlösung nicht 1 + 9, sondern nach tatsächlichen Massenprozenten verdünnt.
(11) Nichtsdestotrotz ist das Ergebnis weiterhin eine Lösung, in der der Gehalt an Formalin schwankt und sukzessive absinkt. Für "normale" histologische Fragestellungen ist dies weitgehend unproblematisch, für immunhistochemische Fragestellungen jedoch, kann diese schwankende Zusammensetzung, die zudem durch die Bildung von Ameisensäure auf einen schwankenden pH-Wert haben kann, unvorteilhaft. Auch einige histologische Färbungen werden von einem zu niedrigen pH-Wert des Formalins negativ beeinflusst (z.B. die Differenzierung oxidativer und glycolytischer Muskelfasern). Daher wird für IHC-Fragestellungen eine Fixierlösung aus Paraformaldehyd mit exakten Konzentrationen von 4%, 6% oder 8 % hergestellt, die über einen Puffer auf einen exakten pH-Wert justiert wird (z.B. 7,0, 7,2 oder 7,4, was dem einem üblichen pH-Wert tierischer / menschlicher Gewebe entspricht). Allerdings sind solche gepufferten PFA-Lösungen nur kurze Zeit haltbar, d.h. sie müssen innerhalb weniger Tage verbraucht werden, weil ansonsten eben die gleichen Zersetzungs- und Gleichgewichtsreaktionen ablaufen wie bei der normalen Formalinlösung. Für IHC-Fragestellungen, bei denen der Vernetzungsgrad der Proteine untereinander eine wichtige Rolle spielt, wird deshalb gepuffertes PFA verwendet, weil hierbei gleichmäßigere und nachvollziehbarere Fixier- und Reaktionsbedingungen erzielt werden.
(12) Die Nachteile und Unzulänglichkeiten des Formalin (ebenso des PFA) sind lange bekannt und liegen nicht nur in seinem stechend beißenden Geruch, der als störend und unangenehm auffällt, sondern stellen nach neueren Erkenntnissen auch eine signifikante Gesundheitsgefahr dar. In der EU wird in Rahmen der REACH Verordnung (EG Verordnung 1907/2006, mit Änderungen in EG Nr 1354/2007 und 1272/2008, umgesetzt in deutsches Recht im Chemikaliengesetz vom 2. Juli 2008) eine Liste der gefährlichen Chemikalien geführt und aktualisiert, VHCC (very high concern chemicals), sowie Auflagen erlassen, wann und wie solche VHCC zukünftig zu vermeiden bzw. ihr Einsatz einzuschränken oder zu ersetzen ist.
(13) Weiterhin ist als Nachteil von formalinfixierten Gewebestücken aufzuführen, dass solche bei langer Lagerung hinaus neigen zu verhärten, was sich negativ auf die Schneidbarkeit und die Färbbarkeit der Gewebe auswirkt. Generell sind manche Gewebe, die in Formalin fixiert wurden, spröde und rissig und lassen sich kaum oder nur schwer schneiden (z.B. Leber, Niere, Milz, Muskulatur, Nervengewebe, Gehirn).
(14) Ein weiterer negativer Effekt des Formalin ist die Schrumpfung und die Herauslösung von Fetten und Glykogen. Eine Schrumpfung von bis zu 10% des Gewebevolumens ist bei Formalinfixierungen normal. Dies führt zu Rissen im Gewebe und auch zu der einen oder anderen Fehldeutung hinsichtlich der Ausdehnung und Größe bestimmter Strukturen.
(15) Insgesamt betrachtet ist Formalin ebenso wie gepuffertes PFA im Gesamtblick auf die bekannten Fixiermittel nicht dasjenige Fixiermittel, welches die besten Ergebnisse liefert, sondern vielmehr dasjenige, welches wegen der langjährigen Erfahrung vergleichbare Ergebnisse liefert und kostengünstig zu verwenden und zu beschaffen war.
(16) Eine andere Variante, Gewebe in möglichst frischem Zustand zu untersuchen, ist der Gefrierschnitt. Hier erfolgt die Fixierung des Zustandes durch sofortiges Einfrieren nach der Probennahme. Dabei erfolgt jedoch keine Vernetzung der Proteine untereinander. Die Probe ist nur so lange haltbar, wie sie auf entsprechend niedriger Temperatur gehalten wird. Zudem muss das Einfrieren schlagartig auf sehr niedrige Temperaturen erfolgen (i.d.R. < -78 °C), weil ansonsten die Bildung von Wasserkristallen Feinstrukturen des Gewebes zerstören könnte. Der "Gefrierschnitt" ist der so genannte Schnellschnitt und wird i.d.R. nur für spezielle Anwendungen hergestellt, bei denen z.B. die Zeit fehlt, die chemische Fixierreaktion abzuwarten (z.B. Schnelldiagnostik während einer Operation), oder wenn von vorneherein die Färbung bzw. ein immunhistochemischer Nachweis durch die Fixierung selbst gestört würde. Unter diesen Umständen, kann mit den Nachteilen des Gefrierschnittes eine diagnostische Entscheidung getroffen werden.
(17) Generell besteht allerdings die Erfahrung, dass Färbungen am frischen Gewebe oft intensiver und kräftiger sind und dass Färbezeiten reduziert werden müssen. Dies liegt womöglich daran dass die Bindung der Farbstoffe oft nicht an den chemischen Veränderungen durch die Fixierung gekoppelt ist, sondern weil die Farbstoffe an den Gewebekomponenten selbst binden. Die chemische Fixierreaktion kann hier also in weiten Bereichen als störend für eine gut differenzierende Färbung bezeichnet werden.
(18) Folglich wäre der Gefrierschnitt, wenn er nicht so schwierig zu handhaben und aufzubewahren wäre, der für viele Färbungen qualitativ bessere Weg.
(19) Die Nachteile bei Gefrierschnitten sind z.B. der technische Aufwand der Konservierung (unverzügliches Einfrieren nach Entnahme), das Problem einer längerfristigen Aufbewahrung (die Lagertemperatur darf nicht überschritten werden), die verhältnismäßig dicken Schnitte (i.d.R. um 10 µm), die Unmöglichkeit, einen gefrorenen Schnitt zu entkalken, etc. Aus diesem Grund ist die Fixierung einer Gewebeprobe ein notwendiger Schritt, um eine dauerhafte und längerfristige Konservierung zu gewährleisten.
(20) Aus diesen Gründen besteht ein erheblicher Bedarf weitere Alternativen bereitzustellen, die vergleichbare oder sogar bessere Färbbarkeit von Gewebeproben und Schnitten erlauben, und somit die diagnostische Forschung verbessern.
(21) Die erfindungsgemäße Bereitstellung eines alternativen Fixierungsmittels für Gewebeproben aller Art, insbesondere für die Histologie und Immunhistochemie steht vor dem Hintergrund eben dieser Gesamtsituation und stellt sich die Aufgabe zu gewährleisten, dass Gewebeproben aller Art bei Einsatz der erfindungsgemäßen Fixierung weiterhin allen Färbetechniken zugänglich sind.
(22) Hierzu stellt die Erfindung eine formalinfreie Lösung bereit, die geeignet ist Gewebeproben aller Art zu fixieren und die Färbbarkeit der Proben zu verbessern. Die erfindungsgemäße Lösung zeichnet sich durch die Tatsache aus, dass durch die vorliegende Säure in der erfindungsgemäßen Zusammensetzung eine Gesamt-Aldehydkonzentration von wenigstens 0,5 Mol/l, aber bei Bedarf auch deutlich mehr, freigesetzt werden kann.
   Ähnliche Zusammensetzungen sind zwar aus dem Stand der Technik bekannt (EP 1 895 287 A2), weisen aber keine fixierende Wirkung auf.
(23) Die erfindungsgemäße Fixierlösung ist in Anspruch 1 definiert. Bevorzugte Ausführungsformen oder Anwendungen sind in den Unteransprüchen ausformuliert.
(24) Insbesondere enthält die erfindungsgemäße Lösung
   - wenigstens ein Polyamin, ausgewählt aus der Gruppe bestehend aus Urotropin, Triazinen, Mono-, Di-, Tri-, Tetra-, Penta- oder Hexamethylolmelamin, Dimethylol-dihydroxyethylenurea, Tetramethylol-acetylendiurea, Dimethylol-propylenurea, Acetoguanamin oder 5,5-Dimethylhydantoin und Mischungen derselben, und
   - wenigstens ein Säuerungsmittel ausgewählt aus der Gruppe der freien zwei- oder mehrwertige Säure bestehend aus Oxalsäure, Fumarsäure, Weinsäure, Maleinsäure, Succinsäure, Salzsäure, Essigsäure, Propionsäure, Ameisensäure, Mono-, Di-, Tri-, Chloressigsäure. Borsäure, Phosphorsäure oder Mischungen derselben, dadurch gekennzeichnet dass das Polyamin mit den von der Säure freigesetzten Protonen reagiert und dabei Aldehyde bildet. Besonders bevorzugt sind Zusammensetzungen die z. B. Formaldehyd, Glyoxal, Glutaraldehyd, Ethanal oder Propanal bilden und ggf. in der Lage sind diese freizusetzen.
(25) Das molare Verhältnis zwischen Konzentration der maximalen freisetzbaren Aldehyde in Mol zu der Konzentration der maximalen freisetzbaren Protonen in Mol ist in der erfindungsgemäßen Lösung 1:0,7 bis 1:1,5, vorzugsweise 1:0,7 bis 1:0,9, weiter vorzugsweise 1:0,8 bis 1:1, weiter vorzugsweise 1:0,9 bis 1:1,2, weiter vorzugsweise 1:1 bis 1:1,4 und/oder weiter vorzugsweise 1:1,2 bis 1:1,5 und ist damit so gewählt, dass sich zwischen ,Gesamt freisetzbaren Aldehyd' und ,Gesamt aus der Säure freisetzbaren Protonen' ein Verhältnis von mindestens 0,5 und maximal 2 einstellt.
(26) Weiterhin zeichnet sich die erfindungsgemäßen Lösung dadurch aus, dass die Lösung mindestens ein weiteres polyfunktionelles Aldehyd ausgewählt aus der Gruppe bestehend aus Citral, 3,7-Dimethylocta-2,6-dienal, Geranial, (E)-3,7-Dimethylocta-2,6-dienal, Propanal, Butanal, Valerianaldehyd, Pentanal, Hexanal, Heptanal, Octanal, Nonanal, Decanal, (2 E)-3-Phenylprop-2-enal, Benzaldehyd, Phenylmethanal, Vanilinaldehyd, 4-Hydroxy-3-methoxyphenylmethanal und Mischungen derselben umfasst.
(27) Diese Verbindungen sind vorzugsweise Aldehyde, die noch eine oder mehrere zusätzliche chemische Funktionsgruppen besitzen. Diese chemischen Funktionsgruppen können ausgewählt sein aus den Folgenden: - Arylgruppe, sei es Phenyl, Naphthyl, Thienyl, Indolyl, etc, lineare oder ramifizierte Akyl-, Alkenyl- oder Alkin-Gruppen wie auch dementsprechende halogenierte Gruppen; - Gruppen mit Sauerstoff Hydroxil, Carbonyl, Aldehyd, Halogenformyl, Carbonatester, Carboxilat, Carboxil, Ester, Hydroxiperoxi, Hydroxi, Äther; - Gruppen mit Stickstoff, wie z.B. Carboxamid, Amine, Imine, Imide, Azide, Azo, Cianate, Nitrate, Nitril, Nitrosooxi, Nitroso und Pyridyl; - Gruppen mit Schwefel wie z.B. Sulfidryl, Sulfide, Disulfide, Sulfinyl, Sulfonyl, Sulfino, Sulfate, Thiocyanate, Carbonothyoil; - Gruppen mit Phosphor wie z.B. Phosphino, Phoshono, Phosphat.
(28) Diese Gruppen können einzeln oder mehrfach auftreten, oder auch in Kombinationen miteinander vorliegen.
(29) Hierbei sind z.B. die Aldehyde mit einer oder mehrere Funktionen, die gewählt sind aus der genannten Gruppen, sogenannte multifunktionelle Aldehyde, denn sie können sich durch ihre Aldehydfunktion an verschiedenen Stellen der Probe über verschiedene chemische Mechanismen binden und bieten über ihre andere an sich gebundene und mitgetragene chemischen Funktionen Andockstellen für die eingesetzten Farbstoffe, die zur Färbung der Probe verwendet werden. Durch den Zusatz polyfunktioneller Aldehyde werden daher während dem Schritt der Gewebefixierung zusätzliche chemische Funktionsgruppen an die Gewebeprobe gebunden.
(30) Die chemischen Funktionen der multifunktionellen Aldehyde sind so gewählt, dass bestimmte Arten von Farbstoffe besser gebunden werden als andere oder auch derart gewählt, dass bestimmte Arten von Farbstoffe an der Bindung mit der Probe behindert oder abgeschwächt werden. Somit wird durch die unterschiedliche Affinität der Probe, der auch als differenzierter Chemismus der unterschiedlichen Gewebe bezeichnet wird, eine räumliche Differenzierung der Färbbarkeit der Probe erzielt. Der so erzielte Steuermechanismus ist ein Vorteil der Erfindung, mit dem der Farbkontrast der Probe durch den Zusatz der multifunktionelle Aldehyde zusätzlich gesteuert wird, denn durch Bindung dieser Funktionsgruppen an die Gewebeprobe werden zusätzliche Andockungsstellen und Reaktionsstellen für die Moleküle der Farbstoffe bereitgestellt, so dass eine optimale Färbung nicht nur in kürzerer Zeit erreichbar ist, sondern insbesondere auch eine höhere Farbintensität, Brillanz und/oder Kontrast erzielt werden kann.
(31) Gemäß einer weiteren Ausführungsform enthält eine weitere Fixierlösung im Sinne dieser Erfindung zusätzlich Hexamethylolmelamin, Borsäure, Natriumhydroxid, Phenylmethanal, Tween 20, wobei Hexamethylolmelamin ein Formaldehydabspalter ist, und Phenylmethanal als polyfunktionelles Aldehyd dient. Die praktische Ausführung zur Herstellung dieser Zusammensetzung wird in den Beispielen ausgeführt.
(32) Die molare Konzentration des gesamt verfügbaren Aldehyds in der erfindungsgemäßen Lösung, welches sich aus dem Polyamin zusammen mit der Säure bildet, bzw. welches durch das polyfunktionelle Aldehyd erzeugt wird, wird in der erfindungsgemäßen Lösung vorzugsweise auf mindestens 0,5 Mol/l, vorzugsweise 0,6-0,69 Mol/l, weiter vorzugsweise 0,7-0,79 Mol/l, weiter vorzugsweise 0,8-0,89 Mol/l, weiter vorzugsweise 0,9-0,99 Mol/l, weiter vorzugsweise 0,99-1,2 Mol/l eingestellt. Mit einer solchen Lösung ist eine optimale Fixierung von Gewebeproben gewährleistet, die sowohl die Schneidbarkeit der Probe verbessert wie auch positiven Einfluss auf die Färbbarkeit der Probe hat.
(33) Um das Austrocknen der Probe zur vermeiden, kann als weiterer Zusatz eine stark hygroskopische Chemikalie dazugegeben werden, welche ausgewählt ist aus der Gruppe enthaltend Monopropylenglykol, Dipropylenglykol, Polypropylenglykol, Glyzerin, Pentaerytriol, Sorbitol, Ethylenglykol, Diethylenglykol und Polyethylenglykol.
(34) Um die Oberflächenspannung der Lösung zu reduzieren und die Kriecheigenschaften zu verbessern kann als weiterer Zusatz ein Tensid dazugegeben werden, welches ausgewählt ist aus der Gruppe enthaltend ethoxylierte nicht ionische Tenside mit hohen und/oder niedrigen HLB Wert, Polysorbate besonders Polysorbat 20, 40, 60 oder 80, Saponine, Alkalisalze von Decilsulphate, Decilsulphonate, Dodecilsulfate, Dodecilsulphonate, Dodecilbenzenosulphonate, Oleate, Stearate, Caprate, Caprilate und Betaine.
(35) Um die Isotonie und Osmolarität der Lösung anzupassen können auch organische oder anorganische Salze zum Einsatz kommen, die ausgewählt sind aus der Gruppe der Lithium-, Natrium-, Kalium-, Kalzium-, Strontium- / -chloride, -sulfate, -acetate, -citrate, -nitrate, succinate und/oder -formiate.
(36) Um die Fließeigenschaften der Lösung anzupassen, können auch organische oder anorganische Verdickungsmittel zum Einsatz kommen, die ausgewählt sind aus der Gruppe der Karbomere, Stärke und modifizierte Stärke, Agarose, Dextrose, Methyl-, Ethyl- oder Propyl-Zellulose, Akryllsäure und PVA.
(37) Gemäß einer weiteren Ausführungsform liegt die angemeldete Lösung in wässriger Form vor. Weiterhin - gemäß einer weiteren Ausführungsform - werden die Bestandteile der angemeldeten Lösung als wasserfreie Mischung aus kristallinen und/oder wasserfreien Bestandteilen, die in Form von löslichem Pulver oder als lösliche, gepresste Tablette bereitgestellt. Dieser Pulver oder diese Tablette wird durch den Zusatz von Wasser oder eines anderen geeigneten Lösungsmittels oder Mischung daraus aufgelöst, um eine gebrauchsfertige Fixierlösung bereit zu stellen.
(38) Ein Vorteil der erfindungsgemäßen Lösung ist auch deren pH Stabilität. Die erfindungsgemäße Lösung ist in pH Bereichen von pH 3-8, vorzugsweise pH 3-6 stabil. Diese Stabilität wird durch die Einstellung des molaren Verhältnisses der Amin-Gruppe zur Säure-Gruppen in einem Verhältnis von annähernd 1:1 erreicht. Solange freies Polyamin in der Lösung vorhanden ist, funktioniert dieses als Depot und der pH kann nicht steigen. Diese pH Stabilität beruht auf der starken Pufferkapazität der Polyamine, die in der Regel etwas alkalisch reagieren. Durch die Reaktion des Polyamins, z.B. Urotropin mit dem Proton der Säure (z.B. Zitronensäure), bilden sich ein Aldehyd und das entsprechende Ammoniumsalz. Es stellt sich hierbei ein Gleichgewicht ein, welches von der Dissoziationskonstante der Säure und der Hydrolysekonstante des Polyamins beeinflusst wird und dabei den pH auf ein bestimmtes Niveau - bei ca. pH 4 bis pH 8-einreguliert. Im Fall von Urotropin, kann 1 Mol von Urotropin 6 Mol Protonen verbrauchen, womit schon geringe Mengen von Urotropin oder Polyaminen große Mengen von Säure puffern und damit den pH der Lösung auf einem konstanten Wert gehalten wird.
(39) Durch diese Stabilität können pH Schwankungen nahezu ausgeschlossen werden. So wird z.B. auch eine pH Veränderung durch Bildung von Ameisensäure vermieden und damit sind auch keine "Formalin Pigmente" beim Einsatz der erfindungsgemäßen Lösung zu finden. Erfreulicherweise sind daher auch dem Fachmann bekannte Zusätze zur Stabilisierung von Lösungen, welche eine Färbungen stören könnten, wie z.B. Methanol und Butanol, nicht nötig.
(40) Ein weiterer Vorteil der erfindungsgemäßen Lösung ist die Farbbrillanz und Farbintensität der mit der erfindungsgemäßen Lösung fixierten Proben. So zeigen die Ausführungsbeispiele 4-5 für die exemplarisch durchgeführten Fixierungen eine deutliche Verbesserung der morphologischen Erhaltung und Schneidbarkeit der fixierten Proben. Weiterhin zeigt sich bei den durchgeführten Färbungen, nämlich Hämatoxylin & Eosin, Masson Goldner Trichrom, MSB-Lendrum und Azan nach Geidies, beschrieben in Beispiel 4 und 5, dass durch Einsatz der erfindungsgemäßen Lösung zur Fixierung eine deutliche Verbesserung der Färbbarkeit allgemein und insbesondere der Farbsättigung und der Farbbrillanz erzielt wird. Darüber hinaus sind zahlreiche schwierig zu bearbeitende Gewebe, wie z.B. Gehirn, Haut und Hoden mit der neuen Fixierung deutlich besser zu schneiden und anzufärben.
(41) Es wird angenommen, ohne jedoch durch diese Annahme eine Beschränkung einzuführen, dass die Verbesserung der Färbbarkeit auch schon bei geringem Zusatz der multifunktionalen Aldehyde wie z.B. Citral, 3,7-Dimethylocta-2,6-dienal, Geranial, (E)-3,7-Dimethylocta-2,6-dienal, Propanal, Butanal, Valerianaldehyd, Pentanal, Hexanal, Heptanal, (2 E)-3-Phenylprop-2-enal, Benzaldehyd, Phenylmethanal, Vanilinaldehyd, 4-Hydroxy-3-methoxyphenylmethanal, Heptanal, Octanal, Nonanal, Decanal, und Mischungen derselben darauf zurückzuführen ist, dass diese sich in der Gleichgewichtreaktion aufaddieren.
(42) In der angemeldeten Lösung findet eine solche Gleichgewichtsreaktion statt, bei der das Polyamin mit den Protonen, die von der Säure freigesetzt werden, z.B. in ein Aldehyd übergeht. Die zugegebenen zusätzlichen multifunktionellen Aldehyden summieren sich auf der Aldehydseite auf und können dann auch in der Probe eingebaut werden. Die multifunktionellen Gruppen dieser Aldehyde dienen dabei als zusätzliche Andockstellen für Farbstoffe, die über polare Bindungen, Wasserstoffbrücken oder selbst kovalente Bindung an diese Stellen gebunden werden können, und dadurch die Farbreaktionen der eingesetzten histologischen und/oder immunhistochemischen Färbungen verbessern.
(43) Erfreulicherweise zeigte sich, dass auch weitere Probleme, die bei anderen formalinfreien-Fixierungen bekannt sind, durch die Verwendung der angemeldeten Lösung umgangen oder vermieden werden.
   Zu nennen ist beispielsweise die HOPE-Fixierung (Hepes-Glutamic acid buffer mediated Organic solvent Protection Effect), die sich besonders für molekularbiologische Fragestellungen eignet, da durch dieses Fixierungsmittel Nukleinsäuren und Antigenstrukturen besonders gut erhalten werden. Diese Fixierung lässt: sich jedoch nur in einer aufwendigen Apparaturen und mit einer aufwendigen Verarbeitungsprozedur durchführen, so dass sie sich nur schwer für die tägliche Routine eignet.
   Ein anderes formalinfreies Fixierungsmittel wird von der Firma Anatech als "Prefer-Fixativ" angeboten. Dieses enthält Glyoxal, Ethanol und Puffer; hier liegen bislang aber nur wenige Erfahrungswerte in der histologischen Anwendung vor. Schon das Vorliegen von Alkohol in der Lösung, lässt sie aber für zahlreiche Färbungen ausscheiden.
   Ein weiteres Produkt stammt von der Firma Sigma und wird unter der Bezeichnung Accustain vertrieben. Auch hier ist Ethanol der Grundbestandteil des Fixierungsmittels.
(44) Derzeit liegt für keines der alternativen Fixiermittel eine umfassende Prüfung und wissenschaftliche Evaluierung der Ergebnisse histologischer Färbungen vor. Die Anforderungen an ein formalinfreies Fixiermittel sind dabei primär eine Vergleichbarkeit der Ergebnisse mit bisherigen Ergebnissen von formalinfixierten Proben, sowie eine identische oder verbesserte Handhabung in der Routine, identische oder ähnliche Fixierdauern und identische oder bessere Färbeeigenschaften.
(45) Die erfindungsgemäße Lösung erfüllt diese Anforderungen und erlaubt erstmals das Fixieren und Anfärben von formalinfrei fixierten Gewebeproben unter Beibehaltung und sogar deutlicher Verbesserung der Farbsättigung, Farbbrillanz und Farbintensität in den nachfolgend aufgezählten Verfahren:
   a) Hämatoxylin & Eosin Färbung, unter Verwendung verschiedener Hämatoxylinlösungen (nach Mayer, Gill, Harris, Weigert, Verhöff, Hansen, etc.) und Eosinlösungen (in wässriger, alkoholischer oder methanolischer Form mit verschiedenen Konzentrationen und Zusätzen von Essigsäure oder anderen pHsenkenden Zusätzen).
   b) Trichromfärbung wie beispielsweise nach Masson, Masson-Goldner, Azan, Crossmon, Mallory, Cason, und andere Färbeprotokolle, welche eine ein-, zwei, drei- oder mehrstufige Färbung über Kernfärbungen, Plasmafärbungen und Faserfärbungen erzielen.
   c) Tri-, Tetra-, Penta- und Polychromatische Übersichts- und Spezialfärbungen, wie beispielsweise Movat Pentachrom, Mollier Vierfachfärbung, van Gieson, Hansen, Weigert und andere Färbungen zur physikalischen oder chemischen Färbung von speziellen Gewebestrukturen.
   d) Spezialfärbungen bzw. Spezialnachweise von Fasern, Gewebebestandteilen, Zellkernen, Plasmabestandteilen und chemischen Eigenschaften, wie z.B. Elastica-Färbungen, Aldehydnachweise, Eisennachweise, andere Metallnachweise, Amyloidnachweise, Fettfärbung, Darstellung von Mucopolysaccariden, Silberfärbungen und Goldtonierungen, selektive Kernfärbungen, zytologische und hämatologische Färbungen, Calciumnachweise, Knochen- und Knorpelfärbungen, Nervenfärbungen, etc.
(46) Für alle erwähnten Färbeverfahren ist auszuführen, dass im Nachgang zu der Fixierung, die im Fixierungsmittel eingelegten Gewebestücke oder mit dem Fixierungsmittel durchtränkten Gewebestücke, Organe oder ganzen Organismen einer klassischen, laborüblichen Weiterverarbeitung unterzogen, d.h. sie werden entwässert und anschließend mit Paraffin oder auch anderen Einbettmedien (Celloidin, Acrylate) infiltriert und zu Probenblöcken verarbeitet, die schließlich am Mikrotom geschnitten werden können.
(47) Die Erfindung verbessert hierbei die plastischen Eigenschaften des fixierten Materials, so dass bei der Verarbeitung zu Dünnschnitten, Schneideartefakte gar nicht oder nur in geringem Maße auftreten, weil zum einen keine Gewebeverhärtung durch "Überfixieren" auftritt und zum anderen die Gewebe nicht so stark schrumpfen, wie bei Formalinfixierungen üblich.
(48) Hierbei zeigt sich im Ergebnis, dass die mit der Erfindung behandelten Gewebestücke sich vergleichbar, teilweise sogar leichter als formalinfixierte Gewebeproben verarbeiten lassen. Somit ist ein weiterer Vorteil der erfindungsgemäßen Lösung die Tatsache, dass Gewebeproben die mit dieser Lösung fixiert wurden, hervorragende Schneideigenschaften aufweisen, und bei solchen Geweben die, wenn sie mit formaldehydhaltigen Lösungen fixiert wurden, schwierig zu schneiden sind (z. B. Gehirngewebe), es zu deutlichen Verbesserungen der Schneideeigenschaften kommt.
(49) Damit werden weniger Artefakte in den histologischen Schnitt eingeführt, was eine wesentliche Verbesserung der mikroskopischen Untersuchung der Probe ermöglicht und damit die Diagnose von histologischen Anomalien und Auffälligkeiten erheblich erleichtert.
(50) Im Ergebnis sind die Färbungen nicht nur identisch, sondern wesentlich kräftiger und besser differenzierbar, als Färbungen an formalinfixierten Proben, da Farbunterschiede im histologischen Schnitt schärfer und kräftiger sind, als bei formalinfixierten Proben, die Farben selbst sind leuchtender und selektiver für Unterschiede im Chemismus der Gewebe.
(51) Vorteilhaft ist zudem die Gewebeerhaltung. Schrumpfungen treten kaum, und wenn, dann in deutlich geringerem Maße als bei Formalinfixierungen auf. Zellkerne behalten ihre runde Form und lassen sich sehr gut mit üblichen Kernfarbstoffen anfärben. Bis in feinste Strukturen hinein ist eine hervorragende Erhaltung zu beobachten, die sogar der Erhaltung von Fixierungen mit Sublimat- und pikrinsäurehaltigen Fixierungsmitteln gleichkommt.
(52) Vorteilhaft ist weiterhin die einfache Handhabung. Die etablierten Laborroutinen müssten nicht geändert werden, da Fixierzeiten und Anwendung identisch bleiben können. Gewebeproben werden in die Probengefäße mit der Erfindung gegeben und verbleiben dort bis zur Weiterverarbeitung. Die Fixierzeiten entsprechen denen des Formalin. Längere Fixierungen sind unproblematisch, bzw. sogar vorteilhaft. In keinem Fall aber ist eine ungewünschte Überfixierung der Gewebe bei Behandlung mit der erfindungsgemäßen Lösung zu beobachten. Ferner ist die angemeldete Lösung aus gefahrstoff- und gefahrgutrechtlicher Sicht unbedenklich und kann auch in der Entsorgung gehandhabt werden, wie unbedenklicher Chemikalienabfall.
(53) Im weiterem betrifft die Erfindung auch die Anwendung der Lösung als Konservierungsmittel für makroskopische Präparate, mit unter also ganze Tierkörper oder Leichen, wie sie in der Anatomie-Lehre Verwendung finden. Darüber hinaus findet sie auch Anwendung für die Fixierung und dauerhafte Konservierung von biologischem Probenmaterial in naturkundlichen Museen, zoologischen oder botanischen Sammlungen, Forschungssammlungen und Lehrsammlungen.
(54) Die Erfindung bezieht sich auch auf die Anwendung des Fixierungsmittels für immunhistochemische Färbungen mit paraffingängigen Antikörpern, ebenso wie für Antikörper, die für Gefrierschnitte oder für Kunststoffpräparate geeignet sind.

### Beschreibung der Figuren:

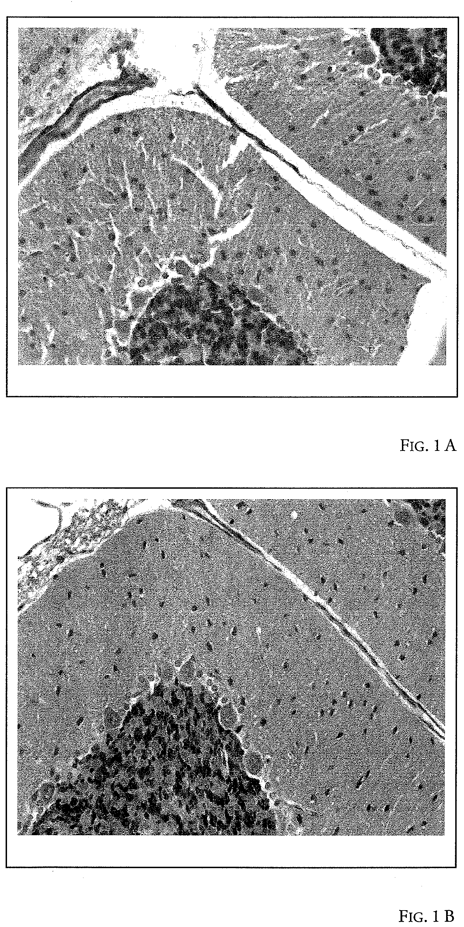

**Figur 1****:** zeigt eine Gegenüberstellung von Färbeergebnissen einer AZAN Färbung an einer Gewebeprobe, nämlich Kleinhirn Ratte, wobei die für Figur 1A verwendete Probe mit Formalin 4%, gemäß Standardverfahren fixiert wurde und die für Figur 1B verwendete Probe im identischen Verfahren allerdings mit der erfindungsgemäßen Lösung fixiert wurde. Deutlich ist erkennbar dass Figur 1B weniger Risse aufweist, eine bessere Erhaltung des Präparates und der Neuronen zeigt sowie eine kräftigere Färbung annimmt.

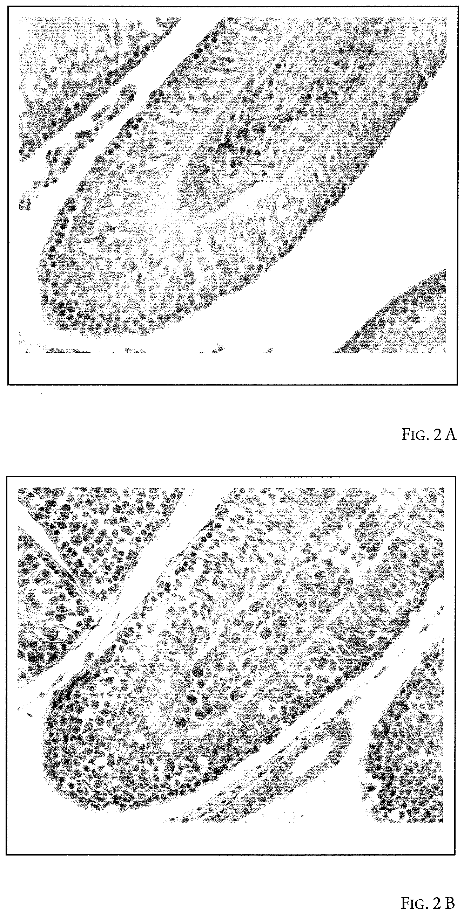

**Figur 2****:** zeigt eine Gegenüberstellung von Färbeergebnissen einer HÄMATOXYLIN & EOSIN (H&E) Färbung an einer Gewebeprobe, nämlich Hoden Ratte, wobei die für Figur 2A verwendete Probe mit Formalin 4%, gemäß Standardverfahren fixiert wurde und die für Figur 2B verwendete Probe im identischen Verfahren allerdings mit der erfindungsgemäßen Lösung fixiert wurde. Deutlich ist erkennbar dass Figur 2B klarer umgrenzte Strukturen aufweist, Feinstrukturen besser erhalten sind sowie dass die Probe eine kräftigere Färbung annimmt.

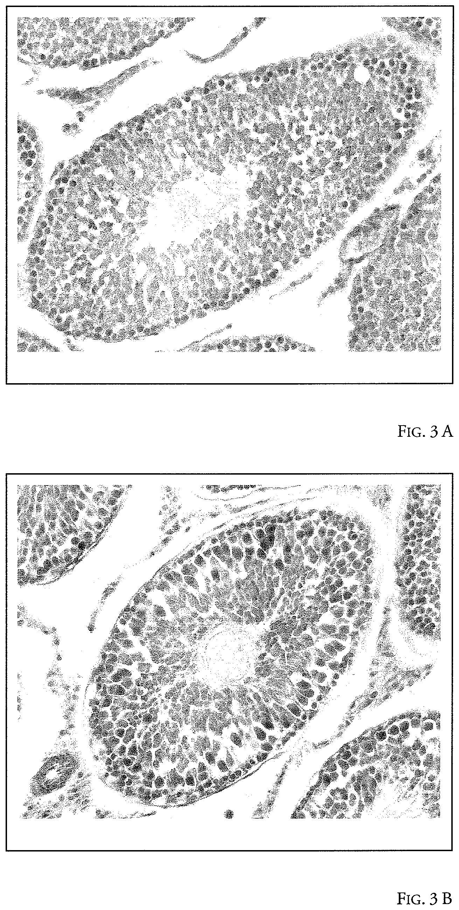

**Figur 3****:** zeigt eine Gegenüberstellung von Färbeergebnissen einer MSB LENDRUM Färbung an einer Gewebeprobe, nämlich Hoden Ratte, wobei die für Figur 3A verwendete Probe mit Formalin 4%, gemäß Standardverfahren fixiert wurde und die für Figur 3B verwendete Probe im identischen Verfahren allerdings mit der erfindungsgemäßen Lösung fixiert wurde. Deutlich ist erkennbar dass in Figur 3B die Differenzierung der Feinstrukturen besser herauskommt sowie dass die Probe eine kräftigere Färbung annimmt.

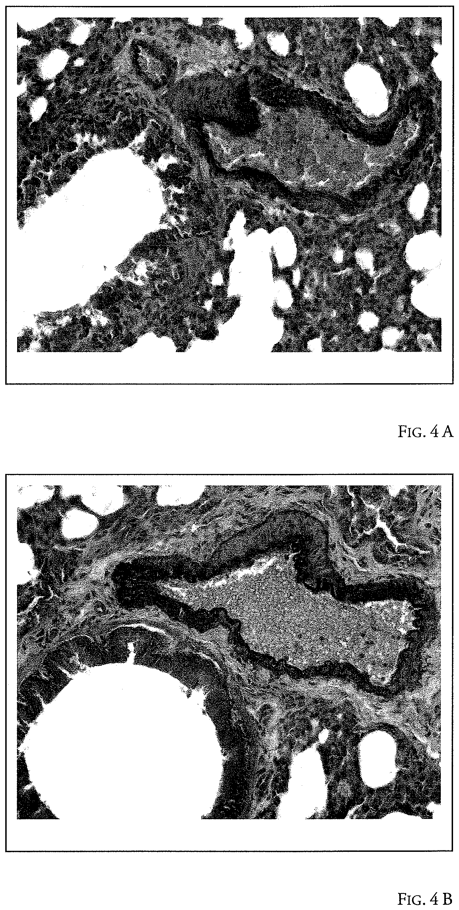

**Figur 4****:** zeigt eine Gegenüberstellung von Färbeergebnissen einer MOVAT Färbung an einer Gewebeprobe, nämlich Lunge Ratte, wobei die für Figur 4A verwendete Probe mit Formalin 4%, gemäß Standardverfahren fixiert wurde und die für Figur 4B verwendete Probe im identischen Verfahren allerdings mit der erfindungsgemäßen Lösung fixiert wurde. Deutlich ist erkennbar dass
Figur 4B klarer umgrenzte Strukturen aufweist, Feinstrukturen (Bronchien und Aviolen) besser erhalten sind sowie dass die Probe eine kräftigere Färbung annimmt.

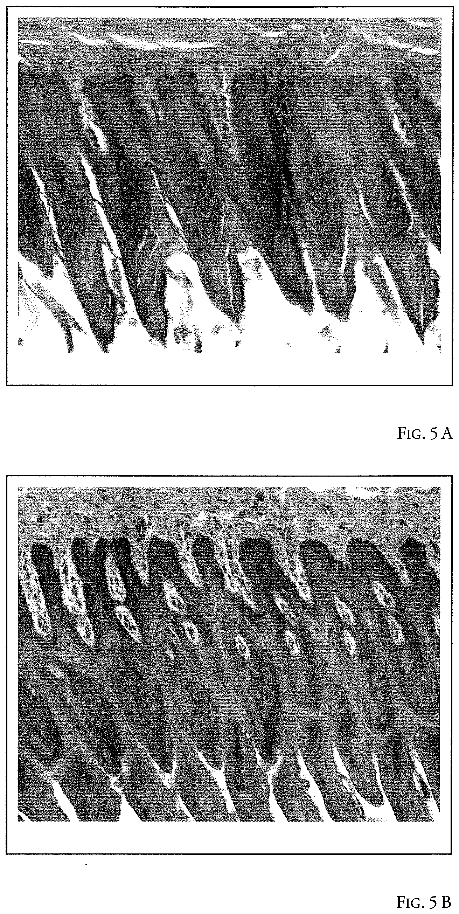

**Figur 5****:** zeigt eine Gegenüberstellung von Färbeergebnissen einer MASSON TRICHROM Färbung an einer Gewebeprobe, nämlich Zunge Ratte, wobei die für Figur 5A verwendete Probe mit Formalin 4%, gemäß Standardverfahren fixiert wurde und die für Figur 5B verwendete Probe im identischen Verfahren allerdings mit der erfindungsgemäßen Lösung fixiert wurde. Deutlich ist erkennbar dass Figur 5B eine schärfere Differenzierung der Feinstrukturen aufweist, die Färbung zu kräftigere gefärbten Zellkernen führt und die Probe insgesamt eine kräftigere Färbung annimmt.

### Beispiele

### Beispiel 1. Zusammensetzung und Komponenten eines Fixierungsmittels

| **POS.** | **PRODUKT** | **%** | **G/L** | **Verwendungsbereich** |
|---|---|---|---|---|
| **1** | **Urotropin** | 4 | 40 | bis zu 20% |
| **2** | **Zitronensäure** | 5,43 | 54,29 | bis zu 35% |
| **3** | **TWEEN 80** | 1,43 X 10E-2 | 0,143 | bis zu 5% |
| **4** | **Monopropylenglycol** | 2,86 | 28,57 | bis zu 20% |
| **5** | **(2 E)-3-Phenylprop-2-enal** | 4,29 X 10E-2 | 0,429 | bis zu 5% |
| **6** | **SPAN 80** | 0,71X10E-2 | 0,07 | bis zu 5% |
| **7** | **H20 oder geeignetes Lösungsmittel.** | 87,65 | 876,5 | Auffüllen auf 100% |
| | **TOTAL** | | 1000 | |

### Beispiel 1.1: Berechnung der molaren Verhältnisse des Fixierungsmittel zur Gewebefixierung

Bei einer Zusammensetzung gemäß Beispiel 1 mit den Komponenten Urotropin und Zitronensäure berechnet sich das molare Verhältnis wie folgt:
Urotropin setzt bis 6 Mol Formaldehyd aus 1 Mol Urotropin frei. Zitronensäure: setzt bis 3 Mol Protonen aus für 1 Mol Zitronensäure. 1 Mol Zitronensäure (wasserfrei) = 192,124 g/Mol => 192,124 g; weiterhin entspricht 1 Mol Urotropin = 140,19 g/Mol => 140,19 g

Eine Lösung, die 4% Urotropin und 5,5% Zitronensäure (wie in dieses Beispiel 1 vorgeschlagen) enthält, erreicht damit eine molare Konzentration Urotropin von 0,28 M und kann maximal bis 1,71 M Formaldehyd bilden. Ferner ist die molare Konzentration Zitronensäure 0,28 M und kann maximal bis 0,85 M Protonen bilden.

Das bedeutet, dass in der Lösung aus Beispiel 1 0,85 Mol Formaldehyd aus HMTA gebildet werden können und es weiterhin ein Überschuss von HMTA in der Lösung bleibt. Das Molare Verhältnis zwischen gesamt freisetzbaren Aldehyd und gesamt aus der Säure freisetzbaren Protonen ist in diesen Fall ca. 2:1, wobei zu berücksichtigen ist, das Urotropin im Überschuss vorliegt.

Bei einer Gleichgewichtsreaktion, bei der 0,85 Mol Formaldehyd gebildet werden können, funktioniert die Lösung hervorragend als Fixierlösung für die Histologie (siehe Beispiel 5, sowie Figuren 1 bis 5).

### 1.2. Vergleichsrechnung: am Beispiel einer anderen üblichen Lösungen:

Eine bekannte Lösung enthaltend 1% Hexamethylentetramin (HMTA) und 1% Zitronensäure, weist nach entsprechender Berechnung wie unter Beispiel 1.1. eine molare Konzentration HMTA von 0,07M auf und kann maximal bis 0,42 M Formaldehyd bilden. Die molare Konzentration Zitronensäure ist hier bei 0,052M und kann maximal bis 0,156 M Protonen bilden.

Das bedeutet, dass bei dieser bekannten Lösung maximal 0,156 Mol Formaldehyd aus HMTA gebildet werden können und ein Überschuss von HMTA in der Lösung bleibt. Das molare Verhältnis zwischen gesamt freisetzbaren Aldehyd und gesamt aus der Säure freisetzbaren Protonen ist in diesen Fall ca. 2,6:1.

Wenn maximal 0,156 Mol Formaldehyd gebildet werde, funktioniert die Lösung NICHT als Fixierlösung für die Histologie, da alle bekannten Nebeneffekte - wie auch im Text oben beschrieben wie auch Schrumpfungen und morphologische Veränderungen bis auf beginnende Degeneration von dem Gewebe auftreten. Die genannten Werte wurden experimentell für HMTA und Zitronensäure bestätigt.

### Beispiel 2: Zusammensetzung und Komponenten einer weiteren bevorzugten Ausführungsform

| **PRODUKT** | % | **G/L** | **Verwendungsbereich** |
|---|---|---|---|
| **Hexamethylolmelamin** | 6 | 60 | 0-20% |
| **Borsäure** | 3 | 30 | 0-35% |
| **Natriumhydroxid** | 0,4 | 4 | 0-5% |
| **Dipropylenglycol** | 2,86 | 28,57 | 0-20% |
| **Phenylmethanal** | 0,01 | 0,1 | 0-5% |
| **Polysorbate 20** | 0,01 | 0,1 | 0-5% |
| **H20 oder geeignetes Lösungsmittel** | 87,65 | 876,5 | 10-99% |
| **TOTAL** | | 1000 | |

Das Hexamethylolmelamin, im weiteren HMM genannt, geht folgende Gleichgewichtreaktion ein:

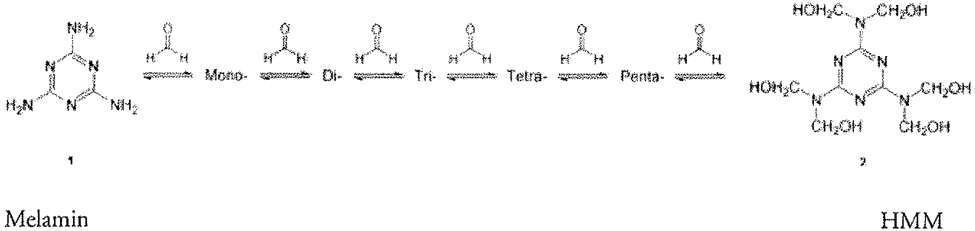

Diese Reaktion, läuft am besten bei pH 6-8 ab, weshalb gemäß vorliegender Ausführungsform eine schwache Säure, nämlich Borsäure verwendet wird. Der pH wird mit Natriumhydroxid angepasst. Es können pro Mol HMM -> 6 Mol Formaldehyd freigesetzt werden. Hieraus errechnet sich:

| | |
|---|---|
| 1 Mol HMM | 270g |
| 1 Mol Formaldehyd | 30g |
| 1 Mol HMM enthält 6 Mol Aldehyd oder | 180g |

Um eine Lösung mit gesamtfreisetzbarem Formaldehydgehalt von 4%/l zu erhalten, braucht man folglich 40g freisetzbares Formaldehyd oder 60g HMM.

Von der Borsäure spalten sich 3 Protonen ab. Borsäure ist darstellbar mit der Formel H3BO3 und weist eine Molmasse von 61,83g auf. Um 6 Mol Protonen zu bekommen, braucht man daher 27,5g, mit etwas Überschuss gerechnet 30g Borsäure, bezogen auf 1000 ml Lösung.

Bei der vorliegenden Zusammensetzung stellt sich ein Verhältnis von Gesamt-freisetzbarem-Aldehyd / Gesamt-freisetzbaren-Protonen von ca. 1:1 ein.

### Beispiel 3: Weitere alternative Ausführungsformen

Gemäß den oben in Beispiel 1.1. und auch Beispiel 2 dargestellten Berechnungen können weitere alternative Zusammensetzungen zubereitet werden. Die alternativ einsetzbaren Bestandteile sind in nachfolgender Tabelle aufgeführt.

Jede Kombination der Substanzen angegeben unter Position 1 mit den Substanzen aus Position 2 ist darstellbar. Gegebenenfalls werden die Substanzen aus Position 5 hinzu kombiniert z.B. um damit den Anteil an gesamt-freisetzbarem- Aldehyd einzustellen. Erfindungsgemäß muss eine durch diese Kombinationen zusammengestellte Lösung, mindestens 0,5 Mol/l gesamt freisetzbares Aldehyd aufweisen. Die Substanz Alternativen der Positionen 3 und 4 sowie 6 und 7 sind optional und nach Bedarf kombinierbar.

| **POSITION bezogen auf die Tabelle in Beispiel 1** | **ALTERNATIVE KOMPONENTEN** |
|---|---|
| 1 | Urotropin, Triazinen, Dimethylol, Dihydroxyethylenurea, Tetramethylol-acetylendiurea, Mono-, Di-, Tri-, Tetra-, Penta- oder Hexamethylolmelamin, Dimethylol-propylenurea, Acetoguanamin oder 5,5-Dimethylhydantoin oder Mischungen derselben |
| 2 | Oxalsäure, Weinsäure, Succinsäure, Salzsäure, Essigsäure, Propionsäure, Ameisensäure, Mono-, Di-, Tri-, Chloressigsäure, Harnsäure, Zitronensäure, Borsäure, Phosphorsäure, oder Mischungen derselben |
| 3 | TWEEN 80, Polysorbate 20, 40, 60 oder 80, Alkaline, Laurilsulfate; Dodecilsulfate, Dodecilsulfonate, Dodecilbenzenosulfonate; Fettsäuren ethoxyliert; Ionische und nicht-ionische Tenside mit hohem HLB (HLB-Wert (engl. Abk.: hydrophilic-lipophilic-balance) beschreibt in der Chemie den hydrophilen und lipophilen Anteil von hauptsächlich nicht-ionischen Tensiden und wurde 1954 von W. C. Griffin vorgeschlagen. Tenside mit einem hohen HLB-Wert bewirken eine |
| | gute Benetzung hydrophiler Oberflächen) oder Mischungen derselben |
| 4 | Mono-, Di-, oder weitere Poly-Propylenglykole; Glyzerin; Mono-, Di-, oder weitere Poly-Ethylenglycole; Sorbitol, Pentaeritriol, PEG niedermolekular, PEG hochmolekular und Mischung derselben |
| 5 | Citral, 3,7-Dimethylocta-2,6-dienal, Geranial, (E)-3,7-Dimethylocta-2,6-dienal, Propanal, Butanal, Valerianaldehyd, Pentanal, Hexanal, Heptanal, Octanal, Nonanal, Decanal, (2 E)-3-Phenylprop-2-enal, Benzaldehyd, Phenylmethanal, Vanilinaldehyd, 4-Hydroxy-3-methoxyphenylmethanal und Mischungen derselben |
| 6 | SPAWN 80, Polysorbate, Laurilsulfate, Fettsäuren ethoxyliert, ionische, nicht ionische Tenside mit niedrigen HLB oder Mischungen davon |
| 7 | H20; Alkohole; Acetone; Dimethylsulfoxid; Akylcarbonate; polare organische Lösungsmittel und Mischungen davon |

### Beispiel 4: Verfahren zur Präparation von histologischen Proben zur mikroskopischen Untersuchung.

Gemäß dem erfinderischen Verfahren sollte die Gewebeprobe so frisch wie möglich in der Fixierlösung z.B. die Lösung gemäß Beispiel 1, gebracht werden. Allgemein üblich ist es dass die Menge der Fixierlösung dem zwanzigfachen des Probenvolumens entspricht und die Fixierzeit abhängig von der Probengröße ist. Je nach Größe bleiben die Proben von 12 bis 36 Stunden, größere Proben auch 72 Std. oder länger in der Fixierlösung liegen. Man geht von einer Diffusionsdistanz bzw. Eindringgeschwindigkeit von 1 mm in 2-4 Std. aus.

Um die Probe anschließend in Paraffin oder anderen Einschlussmitteln einzubetten ist eine vollständige Entwässerung der Probe notwendig. Zunächst wird die Probe aus der Fixierlösung genommen, in fließendem Wasser gewaschen und in einer Reihe von Alkoholen in aufsteigender Konzentration getaucht. Die Schritte zwischen den Konzentrationsstufen sind hier z.B. 30 - 50 - 60 - 70 - 80 - 90 - 96 - 100. Als Alkohole werden üblicherweise Ethanol oder Isopropanol verwendet. Im Anschluss an die Entwässerung wird die Probe in einem geeignetes organisches Lösungsmittel getaucht, welches sowohl mit Alkohol, wie auch mit dem Einbettmedium mischbar ist, dann folgt die Infiltration mit dem eigentlichen Einbettmedium (Paraffin) in mehreren Stufen, für jeweils mehrere Stunden (abhängig von der Probengröße). Zum Abschluss wird die Probe wird mit einer kleinen Menge Paraffin in eine passende Form eingegossen. Nachdem der Block erstarrt ist, wird der Block aus der Form entfernt kann dann geschnitten werden. Mit einem geeigneten Mikrotom werden Schnitte in der Dicke von 4-6 µm hergestellt und diese auf Glasobjektträger aufgezogen.

Die Glasobjektträger mit den Paraffinschnitten können über längere Zeit gelagert werden. I.d.R. jedoch erfolgt eine direkte Weiterverarbeitung, d.h. Färbung. Hier muss zunächst das Paraffin wieder entfernt und der Gewebeschnitt selbst gewässert werden. Es wird die zuvor beschriebene Prozedur in umgekehrter Reihenfolge angewandt, d.h. Herauslösen des Paraffin mit Xylol, anschließend Alkohol 96 %, 90 %, 80 %, 70 %, o. Ä. eine ähnliche Abfolge, bis hin zum Wasser. Erst dann beginnt die Färbung, wobei bei Farbstoffen, die in alkoholischer Lösung vorliegen die Schritte bis zur vollständigen Wässerung entfallen können und die Objektträger direkt in die alkoholische Färbelösung getaucht werden.

### Beispiel 5: Beurteilung der morphologischen Erhaltung, Schneid- und Färbbarkeit von Paraffinpräparaten

Mit Hilfe von klassisch histologische Färbungen konnte eine diagnostische Auswertung von Schnittproben durchgeführt werden. Die Schnitte wurden aus Geweben angefertigt, welche zuvor entweder in der Lösung aus Beispiel 1 oder in 4%-igen Formalin fixiert wurden. Die qualitative Auswertung erfolgte auf vier exemplarisch ausgewählten Färbungen (1) Hämatoxylin & Eosin (HE), (2) Azan nach Geidies, (3) Masson Goldner Trichrom und (4) MSB Lendrum. Die histologisch diagnostische Auswertung erfasst die Parameter *Morphologische Erhaltung* und *Färbbarkeit* der Schnitte. Die Bewertung des Parameters *Schneidbarkeit* erfolgte während des Schneidevorgangs auf verschiedenen Geweben.

### Exemplarisch eingesetzte Färbungen

HÄMATOXYLIN & EOSIN: Die klassische H & E - Färbung verwendet die Farbstoffe Hämatoxylin in der Zusammensetzung nach Mayer und Eosin. Beide Farbstoffe werden in wässriger Lösung (Eosin ggf. auch als alkoholische Lösung) mit einem definierten pH-Wert bzw. einem definierten Säurezusatz angeboten und liefern ein charakteristisches Färbebild. Zellkerne färben sich hier i.d.R. blau-violett an. Hierbei reagiert der Farbstoff Hämatoxylin, der als Alaun-Komplex angeboten wird, mit dem Chromatin der Zellkerne. Um einen stabilen, wasser- und alkoholunlöslichen Lack zu erhalten wird diese Verbindung anschließend in Leitungswasser oder in eine mit einwertigen Metallionen versetzten Salzlösung getaucht. Die Eosinlösung wird in wässriger Form auf einen pH-Wert von etwa 4,0 eingestellt, was zu einem charakteristisch leuchtend orangenen Farbbild führt. Eosin bindet in unterschiedlicher Intensität an verschiedene Gewebe- und Zellstrukturen und erlaubt somit eine gute Differenzierung des histologische Schnittes.

MASSON GOLDNER TRICHROM: Die Masson Goldner Trichrom sowie die Crossmon-Färbung sind ebenfalls klassisch-histologische Färbungen, die als Trichromfärbung mit drei (bzw. vier) Farbstoffen arbeiten. Die Kerne werden auch hier mit Hämatoxylin angefärbt, jedoch nicht mit einem Alaun-Komplex, sondern über einen Eisenkomplex. Dies führt nicht zu einem blau-violett gefärbten Zellkern, sondern zu einem braun-schwarzen Zellkern, der sich sehr deutlich auch gegen blau gefärbte Gewebekomponenten differenzieren lässt. Als zweiter Farbstoff wird eine Mischung aus Säurefuchsin, Ponceau und Azophloxin verwendet, die sich in verschiedener Weise mit unterschiedlichen Gewebebereichen verbindet und es gestattet Zellplasma und andere intrazelluläre Strukturen zu identifizieren. Dieser Farbstoffkomplex reagiert direkt mit den jeweiligen Gewebestrukturen. Ein weiterer Farbstoff, Orange G ist ein sogenannter Beizfarbstoff, der erst in Gegenwart eines zweiwertigen Metallions, wie es z.B. von Phosphorwolframsäure oder Phosphormolybdänsäure bereit gestellt wird, einen wasser- und alkoholunlöslichen Lack mit bestimmen Gewebestrukturen bildet. Mit diesem Farbstoff lassen sich vor allem Erythrozyten und Muskeln darstellen und deutlich von anderen Geweben unterscheiden. Auch keratinöses Material färbt sich mit Orange G deutlich an. Als vierter Farbstoff wird alternativ Anilinblau oder Lichtgrün verwendet. Hierbei handelt es sich um klassische Faserfarbstoffe, die sich vor allem mit Kollagenen und interzellulären Strukturen verbinden. Ebenso Knorpel- und Knochenmaterial verbindet - je nach Chemismus - mit diesen Farbstoffen. Unterschiedliche Blau- bzw. Grünintensitäten erlauben schließlich diagnostische Aussagen über die Faserzusammensetzung, wobei Anilinblau i.d.R. das differenziertere Bild ergibt.

MSB-LENDRUM: Die MSB-Lendrum-Färbung ist eine der Masson Goldner Trichrom verwandte Färbung, bei der jedoch statt Säurefuchsin-Azophloxin-Ponceau und statt Orange G die Farbstoffe Martiusgelb und Kristallponceau angeboten werden. Im Ergebnis ist ein vergleichbares, jedoch noch weiter differenziertes Bild zu beobachten, wobei die Aussagekraft der MSB-Färbung vor allem für Gefäßstrukturen von besonderem Wert ist, weil hier Muskelstränge, Faseranordnung und Gefäßinnenwände besser differenziert werden, als bei den zuvor genannten Trichromfärbungen.

AZAN NACH GEIDIES: Die AZAN-Färbung gehört ebenfalls in die Reihe der klassischen Trichromfärbung. Die ursprüngliche Varainte nach Heidenhain arbeitet in der Vorbehandlung der Schnitte mit Anilinalkohol, Azokarmin zur Kernfärbung, Phosphorwolframsäure zum Beizen und einem Färbegemisch aus Anilinblau und Orange G und dauert mehrere Stunden. Die nach Geidies modifizierte Variante hingegen verzichtet auf Anilinalkohol, verwendet statt des Azokarmin Kernechtrot und verkürzt die Beizzeiten drastisch. Das Ergebnis der Färbung ist so ähnlich, dass die klassische AZAN-Färbung weitgehend ersetzt werden kann. Die Ergebnisse sind im Wesentlichen mit denen der Masson-Goldner und MSB-Lendrum zu vergleichen. Zellkerne werden durch das in Aluminiumsulfatlösung angebotene Kernechtrot kräftig rot angefärbt und heben sich gut von dem durchgehend blauen Hintergrund ab. Anilinblau und Organge G erzeugen die Gegen- bzw. Hintergrundfärbung (blau) und eine gut differenzierte Färbung der Erythrozyten (Orange) und des Muskelplasmas (ebenfalls kräftig Orange). Zudem färben sich Kreatin, verhornte Epithelien ebenfalls deutlich orange an. Grundsubstanz und Fasern erhalten durch das Anilinblau verschiedene Blauabstufungen. Das Ergebnis der Anilinblau-Färbung wird insgesamt sehr stark von der Beizdauer beeinflusst.

### 5.1. Morphologische Erhaltung

Zur Beurteilung der morphologischen Erhaltung auf lichtmikroskopischer Ebene können folgende Parameter herangezogen werden, (A) Fragmentierung des Gewebes (Rissbildungen) sowie (B) die Darstellung der Zellkerne (Nuldei) und (C) der Zellkörper (Somata).

Die Fragmentierung des Gewebes durch die Bildung von einzelnen Rissen oder ausgebreiteten Rissnetzen resultiert aus einer mangelhaften Fixierung und manifestiert sich bei der Streckung des Gewebeschnittes auf dem Warmwasserbad bzw. der Heizplatte sowie während des Färbeprozesses. Im Zuge der wärmebedingten Streckung des Paraffins und somit auch des von Paraffin durchdrungenen und eingehüllten Gewebeschnittes kommt es zu einer physikalischen Belastung des Paraffin/Gewebe-Verbandes, die bei mangelnder Fixierung im Aufbrechen des Gewebes resultieren kann. Die während der Entparaffinierung und Färbung des Gewebeschnittes auftretenden Zug- bzw. Spannungskräfte setzen besonders an diesen während der Streckung bereits strapazierten Gewebestellen an, erweitern diese oder brechen das Gewebe zur Gänze auf. Die Tendenz zur Rissbildung ist proportional zur Hafteigenschaft des verwendeten Objektträgers. Die Wertung erfolgt zwischen (keine Fragmentierung des Gewebes, 1) sowie (Zellkerne und Zellkörper in ihrer natürlichen Form, 1) und (Gewebe durch Rissbildung zerstört und abgelöst, 4) sowie (Zellkerne eckig und stark eingefallen, Zellkörper massiv geschrumpft mit starker "Hofbildung", 4).

**Generelle Kriterien**

| Fragmentierung | Wertung | Zellkerne | Wertung | Zellkörper | Wertung |
|---|---|---|---|---|---|
| Keine Fragmentierung | 1 | Natürlich | 1 | Natürlich | 1 |
| Leichte Fragmentierung | 2 | Leicht eckig | 2 | Minimale Schrumpfung | 2 |
| Moderate Fragmentierung | 3 | Moderat eckig | 3 | Moderate Schrumpfung | 3 |
| Extreme Fragmentierung; Gewebe ist großflächig zerstört | 4 | Zellkerne eckig und stark eingefallen | 4 | Massive Schrumpfung und / oder Hofbildung | 4 |

### 5.2. Schneidbarkeit

Ein weiteres Kriterium in der histologischen Verarbeitung von Gewebeproben ist die sog. Schneidbarkeit des Gewebes. Die unterschiedlichen Eigenschaften von Fixierungsmitteln resultieren - meist in Abhängigkeit von der Inkubationszeit - in einer unterschiedlichen Schneidbarkeit bzw. Belastbarkeit des Gewebes. Ein Gewebe kann durch Fixierung z.B. spröde und brüchig (keine Schneidbarkeit, 4) oder aber geschmeidig und widerstandsfähig (hohe Schneidbarkeit, 1) werden. Unterschiedliche Gewebeeigenschaften verschiedener Gewebetypen müssen in der Bewertung berücksichtigt werden.

**Generelle Kriterien**

| Schneidbarkeit | Wertung |
|---|---|
| Hohe Schneidbarkeit | 1 |
| Überdurchschnittliche Schneidbarkeit | 2 |
| Unterdurchschnittliche Schneidbarkeit | 3 |
| Keine Schneidbarkeit | 4 |

### 5.3. Färbbarkeit

Histologische Färbungen von Gewebeschnitten erlauben, in Abhängigkeit der verwendeten Farbstoffkombinationen oft mannigfaltige Unterscheidungen zwischen einzelnen Zellen aber auch Gewebetypen. Diese in der Human- und Veterinärdiagnostik aber auch in der medizinischen, zoologischen und botanischen Forschung angewandte histologische Differenzialdiagnose basiert auf der Differenzierung von Zellkerntypen aber insbesondere auch auf der Differenzierung von Farbniederschlägen auf Zellen bzw. Geweben. Eine möglichst hohe Farbsättigung, gleichmäßiger Farbniederschlag, gute Kontrastierung (zwischen Zellkern und Zellkörper) sowie eine hohe Farbbrillanz sind deshalb nicht nur wünschenswerte, sondern auch dringend erforderliche Anforderungen an eine Färbung.

Chemische Reaktionen zwischen dem Fixierungsmittel und dem Gewebe beeinflussen nicht nur die Schneidbarkeit und die Belastbarkeit des Gewebes sondern auch dessen Färbbarkeit. Verschiede Fixierungsmittel können, in Abhängigkeit der Inkubationszeit die Färbbarkeit eines Gewebeschnittes verbessern oder aber auch verringern. Um die Färbbarkeit von Geweben zu bestimmen werden folgende Kriterien herangezogen, 1. Farbsättigung, 2. Gleichmäßiger Farbniederschlag, 3. Kontrast zwischen Zellkern und Zellkörper und 4. Farbbrillanz. Die einzelnen Färbungen müssen getrennt voneinander beurteilt werden, da Färbungen, bzw. deren Komponenten unterschiedlich auf den Einfluss von Fixierungsmitteln reagieren.

**Generelle Kriterien**

| 1. Farbsättigung | Wertung |
|---|---|
| Sehr gute Farbsättigung | 1 |
| Gute Farbsättigung | 2 |
| Mäßige Farbsättigung | 3 |
| Mangelhafte Farbsättigung | 4 |

| 2. Farbniederschlag | Wertung |
|---|---|
| Gleichmäßiger Farbniederschlag ohne Übersättigung | 1 |
| Farbniederschlag mit geringen Schwankungen | 2 |
| Teils unregelmäßiger Farbniederschlag | 3 |
| Vollkommen unregelmäßiger Farbniederschlag | 4 |

| 3. Kontrast (Zellkern / Zellkörper) | Wertung |
|---|---|
| Sehr guter Kontrast (generell gute Differenzierbarkeit von Kernbestandteilen und/oder Kernmembranen) | 1 |
| Guter Kontrast (größtenteils gute Differenzierbarkeit von Kernbestandteilen und/oder Kernmembranen) | 2 |
| Mäßiger Kontrast (wenig Differenzierbarkeit von Kernbestandteilen und/oder Kernmembranen) | 3 |
| Schlechter Kontrast (keine Differenzierbarkeit von Kernbestandteilen und/oder Kernmembranen) | 4 |

| 4. Farbbrillanz | Wertung |
|---|---|
| Sehr hohe Farbbrillanz | 1 |
| Hohe Farbbrillanz | 2 |
| Niedrige Farbbrillanz | 3 |
| Sehr niedrige Farbbrillanz | 4 |

### 5.4. Auswertung / Ergebnis

Der beschriebene Kriterienkatalog bildet die Grundlage für die anschließende tabellarische Darstellung der Ergebnisse. Von folgenden Geweben wurden nach 24 - stündiger Fixierzeit in der Lösung gemäß Beispiel 1 oder 4% Formalin Schnittproben hergestellt: Gehirn, Herz, Lunge, Niere, Haut und Hoden. Diese wurden dann gleichzeitig mit HE, Azan n. Geidies, Masson Goldner Trichrom und MSB Lendrum gefärbt.

**1. Morphologische Erhaltung:**

| Kriterium | Lösung nach Beispiel 1 | Formalin |
|---|---|---|
| Fragmentierung | 1 | 3 |
| Zellkerne | 2 | 2 |
| Zellkörper | 2 | 2 |

**2. Schneidbarkeit:**

| Gewebetyp | Lösung nach Beispiel 1 | Formalin |
|---|---|---|
| Gehirn | 1 | 2 |
| Herz | 2 | 2 |
| Lunge | 2 | 3 |
| Niere | 2 | 3 |
| Haut | 1 | 2 |
| Hoden | 1 | 2 |

**3.a. Färbbarkeit (H & E):**

| Kriterium | Lösung nach Beispiel 1 | Formalin |
|---|---|---|
| 1. Farbsättigung | 1 | 2 |
| 2. Farbniederschlag | 2 | 3 |
| 3. Kontrast | 1 | 2 |
| 4. Farbbrillanz | 1 | 2 |

**3.b. Färbbarkeit (Azan nach Geidies):**

| Kriterium | Lösung nach Beispiel 1 | Formalin |
|---|---|---|
| 1. Farbsättigung | 1 | 2 |
| 2. Farbniederschlag | 2 | 2 |
| 3. Kontrast | 2 | 2 |
| 4. Farbbrillanz | 1 | 3 |

**3.c. Färbbarkeit (Masson Goldner Trichrom):**

| Kriterium | Lösung nach Beispiel 1 | Formalin |
|---|---|---|
| 1. Farbsättigung | 1 | 2 |
| 2. Farbniederschlag | 2 | 3 |
| 3. Kontrast | 1 | 2 |
| 4. Farbbrillanz | 1 | 3 |

**3.d. Färbbarkeit (MSB Lendrum):**

| Kriterium | Lösung nach Beispiel 1 | Formalin |
|---|---|---|
| 1. Farbsättigung | 1 | 3 |
| 2. Farbniederschlag | 2 | 3 |
| 3. Kontrast | 2 | 4 |
| 4. Farbbrillanz | 2 | 4 |

## Patentansprüche

1. Fixierungsmittel für Gewebeproben enthaltend
- wenigstens ein Polyamin, ausgewählt aus der Gruppe bestehend aus Urotropin, Dimethylol-dihydroxyethylenurea, Mono-, Di-, Tri-, Tetra-, Penta- oder Hexamethylolmelamin, Tetramethylol-acetylendiurea, Dimethylol-propylenurea, Acetoguanamin oder 5,5-Dimethylhydantoin und Mischungen derselben, und
- wenigstens ein Säuerungsmittel ausgewählt aus der Gruppe der freien ein-, zwei- oder mehrwertige Säure bestehend aus Oxalsäure, Fumarsäure, Weinsäure, Maleinsäure, Succinsäure, Salzsäure, Essigsäure, Propionsäure, Ameisensäure, Mono-, Di-, Tri-, Chloressigsäure, Borsäure, Phosphorsäure und Mischungen derselben, **dadurch gekennzeichnet, dass**
das Polyamin mit den von der Säure freigesetzten Protonen reagiert und dabei Aldehyde bildet oder freisetzt, und das molare Verhältnis zwischen der molaren Konzentration des Aldehyds per Mol Amin zu der molare Konzentration der Protonen per Mol Säure in einem Bereich von 1:0,7 bis 1:1,5 liegt.

2. Fixierungsmittel gemäß Anspruch 1 **dadurch gekennzeichnet, dass** das Fixierungsmittel mindestens ein weiteres polyfunktionelles Aldehyd ausgewählt aus der Gruppe bestehend aus Citral, 3,7-Dimethylocta-2,6-dienal, Geranial, (E)-3,7-Dimethylocta-2,6-dienal, Propanal, Butanal, Valerianaldehyd, Pentanal, Hexanal, Heptanal, Octanal, Nonanal, Decanal, (2 E)-3-Phenylprop-2-enal, Benzaldehyd, Phenylmethanal, Vanilinaldehyd, 4-Hydroxy-3-methoxyphenylmethanal und Mischungen derselben umfasst.

3. Fixierungsmittel gemäß Anspruch 1 oder 2 **dadurch gekennzeichnet, dass** die molare Konzentration des gesamt verfügbaren Aldehyds in der Lösung mindestens 0,5 Mol/l beträgt

4. Fixierungsmittel gemäß einem der vorangegangenen Ansprüche **dadurch gekennzeichnet, dass** es in wässriger Lösung vorliegt.

5. Fixierungsmittel gemäß einem der vorangegangenen Ansprüche **dadurch gekennzeichnet, dass** es auf einen pH-Bereich von 3-8 eingestellt ist.

6. Fixierungsmittel gemäß einem der vorangegangenen Ansprüche **dadurch gekennzeichnet, dass** es stark hydrophile Verbindung enthält ausgewählt aus der Gruppe bestehend aus Monopropylenglykol, Dipropylenglykol, Polypropylenglykol, Glyzerin, Pentaerytriol, Sorbitol, Ethylenglykol, Diethylenglykol und Polyethylenglykol.

7. Fixierungsmittel gemäß einem der vorangegangenen Ansprüche **dadurch gekennzeichnet** dadurch, dass es ein Tensid enthält ausgewählt aus der Gruppe bestehend aus ethoxylierte nicht ionische Tenside mit hohen und/oder niedrigen HLB Wert, Polysorbate besonders Polysorbat 20, 40, 60 oder 80, Saponine, Alkalisalze von Decilsulphate, Decilsulphonate, Dodecilsulfate, Dodecilsulphonate und Dodecilbenzenosulphonate, Oleate, Stearate, Caprate, Caprilate und Betaine.

8. Fixierungsmittel gemäß einem der vorangegangenen Ansprüche **dadurch gekennzeichnet, dass** es als wasserfreie Mischung aus kristallinen oder wasserfreien Bestandteilen, die in Form von löslichen Pulver oder als lösliche gepresste Tablette einem geeigneten Lösungsmittel zugegeben werden, vorliegt.

9. Verfahren zur Anfärbung von formalinfrei fixierten Gewebeproben **dadurch gekennzeichnet, dass**
- in einem ersten Schritt die Gewebeprobe mit dem Fixierungsmittel gemäß einem der Ansprüche 1 bis 8 fixiert wird,
- in einem zweiten Schritt die Gewebeprobe zur Färbung vorbereitet wird und optional geschnitten wird,
- in einem dritten Schritt die Gewebeprobe angefärbt wird, und
- mikroskopisch ausgewertet wird.

10. Verwendung des Fixierungsmittels gemäß einem der Ansprüche 1 bis 8 zur Vorbereitung und Fixierung von Gewebeproben für histologische oder immunhistochemische Färbungen der Gewebeprobe.

## Claims

1. A fixation agent for tissue samples, containing
- at least one polyamine, selected from the group consisting of urotropine, dimethylol dihydroxyethylene urea, mono-, di-, tri-, tetra-, penta- or hexamethylol melamine, tetramethylol acetylene diurea, dimethylol propylene urea, acetoguanamine or 5,5-dimethylhydantoin, and mixtures thereof, and
- at least one acidification agent selected from the group of free monovalent, bivalent or polyvalent acid consisting of oxalic acid, fumaric acid, tartaric acid, maleic acid, succinic acid, hydrochloric acid, acetic acid, propionic acid, formic acid, mono-, di- or tri chloroacetic acid or chloroacetic acid, boric acid, phosphoric acid, and mixtures thereof, **characterised in that**
the polyamine reacts with the protons released from the acid, thus forming or releasing aldehydes, and the molar ratio between the molar concentration of releasable aldehyde per mol of amine to the molar concentration of releasable protons per mol of acid lies in a range from 1:0.7 to 1:1.5.

2. The fixation agents according to Claim 1, **characterised in that** the fixation agent comprises at least one further polyfunctional aldehyde selected from the group consisting of citral, 3,7-dimethylocta-2,6-dienal, geranial, (E)-3,7-dimethylocta-2,6-dienal, propanal, butanal, valeric aldehyde, pentanal, hexanal, heptanal, octanal, nonanal, decanal, (2 E)-3-phenylprop-2-enal, benzaldehyde, phenylmethanal, vanillin aldehyde, 4-hydroxy-3-methoxyphenylmethanal, and mixtures thereof.

3. The fixation agent according to Claim 1 or 2, **characterised in that** the molar concentration of the total available aldehyde in the solution is at least 0.5 mol/l.

4. The fixation agent according to one of the preceding claims, **characterised in that** it is present in aqueous solution.

5. The fixation agent according to one of the preceding claims, **characterised in that** it is set to a pH range of 3-8.

6. The fixation agent according to one of the preceding claims, **characterised in that** it contains strongly hydrophilic compounds selected from the group consisting of monopropylene glycol, dipropylene glycol, polypropylene glycol, glycerol, pentaerythritol, sorbitol, ethylene glycol, diethylene glycol and polyethylene glycol.

7. The fixation agent according to one of the preceding claims, **characterised in that** it contains a surfactant selected from the group consisting of ethoxylated nonionic surfactants with high and/or low HLB value, polysorbates, particularly polysorbate 20, 40, 60 or 80, saponins, alkali salts of decyl sulfates, decyl sulfonates, dodecyl sulfates, dodecyl sulfonates and dodecylbezenesulfonates, oleates, stearates, caprates, caprylates and betaines.

8. The fixation agent according to one of the preceding claims, **characterised in that** it is present as anhydrous mixture of crystalline or anhydrous components, which are added in the form of soluble powder or as soluble pressed tablets to a suitable solvent.

9. A method for staining tissue samples fixed in a formalin-free manner, **characterised in that**
- in a first step the tissue sample is fixed with the fixation agent according to one of Claims 1 to 8,
- in a second step the tissue sample is prepared for staining and is optionally cut,
- in a third step the tissue sample is stained, and
- is evaluated microscopically.

10. Use of the fixation agent according to one of Claims 1 to 8 for preparing and fixing tissues samples for histological or immunohistochemical stains of the tissue sample.

## Revendications

1. Fixateur pour échantillons de tissus, contenant
- au moins une polyamine, choisie dans le groupe constitué par l'urotropine, la diméthylol-dihydroxyéthylène-urée, la mono-, di-, tri-, tétra-, penta- ou hexaméthylolmélamine, la tétraméthylol-acétylènediurée, la diméthylol-propylène-urée, l'acétoguanamine et la 5,5-diméthylhydantoïne et des mélanges de ceux-ci, et
- au moins un acidifiant choisi dans le groupe des mono-, di- et polyacides constitué par l'acide oxalique, l'acide fumarique, l'acide tartrique, l'acide maléique, l'acide succinique, l'acide chlorhydrique, l'acide acétique, l'acide propionique, l'acide formique, l'acide mono-, di-, trichloracétique, l'acide borique, l'acide phosphorique et des mélanges de ceux-ci, **caractérisé en ce que**
La polyamine réagit avec les protons libérés par l'acide et ainsi des aldéhydes sont formés ou libérés, et le rapport molaire entre la concentration molaire de l'aldéhyde par mole d'amine et la concentration molaire des protons par mole d'acide se situe dans une plage de 1:0,7 à 1:1,5.

2. Fixateur selon la revendication 1, **caractérisé en ce que** le fixateur comprend au moins un autre aldéhyde polyfonctionnel choisi dans le groupe constitué par le citral, le 3,7-diméthylocta-2,6-diénal, le géranial, le (E)-3,7-diméthylocta-2,6-diénal, le propanal, le butanal, le valéraldéhyde, le pentanal, l'hexanal, l'heptanal, l'octanal, le nonanal, le décanal, le (2 E)-3-phénylprop-2-énal, le benzaldéhyde, le phénylméthanal, le vanillaldéhyde, le 4-hydroxy-3-méthoxyphénylméthanal et des mélanges de ceux-ci.

3. Fixateur selon la revendication 1 ou 2, **caractérisé en ce que** la concentration molaire de l'aldéhyde disponible en totalité dans la solution est d'au moins 0,5 mole/l.

4. Fixateur selon l'un quelconque des revendications précédentes, **caractérisé en ce qu'**il est présent en solution aqueuse.

5. Fixateur selon l'un quelconque des revendications précédentes, **caractérisé en ce qu'**il est ajusté à un intervalle de pH de 3 à 8.

6. Fixateur selon l'un quelconque des revendications précédentes, **caractérisé en ce qu'**il contient un composé fortement hydrophile choisi dans le groupe constitué par le monopropylèneglycol, le dipropylèneglycol, le polypropylèneglycol, le glycérol, le pentaérythritol, le sorbitol, l'éthylèneglycol, le diéthylèneglycol et le polyéthylèneglycol.

7. Fixateur selon l'un quelconque des revendications précédentes, **caractérisé en ce qu'**il contient un tensioactif choisi dans le groupe constitué par des tensioactifs non ioniques éthoxylés à rapport HLB élevé et/ou rapport HLB faible, des polysorbates, en particulier le polysorbate 20, 40, 60 ou 80, des saponines, des sels alcalins de décylsulfates, décylsulfonates, dodécylsulfates, dodécylsulfonates et dodécylbenzènesulfonates, des oléates, stéarates, caprates, caprylates et des bétaïnes.

8. Fixateur selon l'un quelconque des revendications précédentes, **caractérisé en ce qu'**il se trouve sous forme de mélange anhydre de composants cristallins ou anhydres, qui sont ajoutés sous forme de poudre soluble ou de comprimé pressé soluble à un solvant convenable.

9. Procédé pour la coloration d'échantillons de tissus fixés sans formol, **caractérisé en ce que**
- dans une première étape on fixe l'échantillon de tissu avec le fixateur selon l'une quelconque des revendications 1 à 8,
- dans une deuxième étape on prépare l'échantillon de tissu pour la coloration et en option on le découpe,
- dans une troisième étape on colore l'échantillon de tissu, et
- on l'examine au microscope.

10. Utilisation du fixateur selon l'une quelconque des revendications 1 à 8, pour la préparation et la fixation d'échantillons de tissus pour colorations histologiques ou immunohistochimiques de l'échantillon de tissu.
